# EUROPEAN PATENT SPECIFICATION

(11) **EP 2 683 102 B1**
(45) Date of publication and mention of the grant of the patent: **08.10.2014**
(21) Application number: 12305799.4
(22) Date of filing: 03.07.2012
(51) Int. Cl.: H04J 3/06, H04W 88/08

(54) **Device and Method for transmitting samples of a digital baseband signal**
Vorrichtung und Verfahren zur Übertragung von Proben eines digitalen Basisbandsignals
Dispositif et procédé de transmission d'échantillons d'un signal de bande de base numérique

(43) Date of publication of application: 08.01.2014
(73) Proprietor: ALCATEL LUCENT, 92100 Boulogne-Billancourt (FR)
(72) Inventor: Portolan, Michele, 37400 Amboise (FR); Roullet, Laurent, 26120 Chabeuil (FR)
(74) Representative: Lück, Stephan

(56) References cited:
- EP-A1- 2 059 077
- WO-A1-2008/088762
- US-A1- 2011 075 616
- US-A1- 2011 310 941

## Description

### Field of the invention

The present invention refers to a device and a method for transmitting samples of a digital baseband signal of a wireless communication network. In particular, the invention refers to a transmitting arrangement for a wireless communication network, a method for transmitting a signal, a receiving arrangement for a wireless communication network, a method for reconstructing a digital baseband signal of a wireless communication network, a gateway device for interconnecting a baseband processing device and a remote radio head of a wireless communication network, and a computer program product for executing said methods.

### Background

It is known in the art to subdivide a base station for a wireless communication network, such as a cellular radio access network, into a baseband processing device and at least one radio head connected to the baseband processing device. Typically, the base station comprises a cluster of multiple radio heads connected to the baseband processing device: Usually, optical links are used in order to connect the remote radio heads to the baseband processing device. Interfaces used for the communication between the baseband processing device and the radio head have been specified (e.g. Common Public Radio Interface, CPRI or Open Base Station Architecture Initiative, OBSAI).

Existing interfaces between the baseband processing device and the radio head are based on high-performance connections used to deliver synchronous connections with a controlled delay. The existing interfaces use a communication medium (e.g. optical fiber) to synchronize the baseband processing device and the remote radio head with each other. According to these interfaces, the baseband processing device generates samples with a sampling time Ts and sends them over the synchronous connection. At the receiver side, the synchronization clock is reconstructed from the transmission medium and used to control Digital to Analog Converters (DAC) of the remote radio head. In order to maintain the synchronization, a propagation delay on the synchronous connection must be lower than the sampling time Ts. The quality of the synchronous connection must be good enough to allow a precise reconstruction of a sampling clock.

In US 2011/0075616 A1, a baseband unit interfacing between a baseband section and a radio frequency section is disclosed. This baseband unit is arranged for communication with radio frequency devices using different communication protocols.

The published patent application US 2011/0310941 A1 discloses a network comprising a remotely located radio transceiver system, a digital processing unit and a asynchronous packet-based network extending between the radio transceiver system and the digital processing unit.

### Summary

A drawback of the known interfaces lies in their sensibility to delays in the synchronous connection. A high delay or delay jitter may disturb the proper operation of the remote radio head. In particular, the receiver of the remote radio head may fail to correctly regenerate the sampling clock. As a consequence, it is difficult to use the known interfaces in connection with packet switched networks such as a 10 Gigabit Ethernet.

The object of the present invention is to provide a radio access network with at least one distributed base station comprising a baseband processing device and a remote radio head that allows for efficient transmission of a baseband signal between the baseband processing device and the remote radio head with less strict requirements in particular regarding a transmission delay between the baseband processing device and the remote radio head.

This object is solved by a transmitting arrangement according to claim 1, a method for transmitting a signal according to claim 6, a receiving arrangement according to claim 8, a method for reconstructing a digital baseband signal according to claim 10, a gateway according to claim 12, a baseband processing device according to claim 13 and a computer program product according to claim 14.

According to an embodiment, a transmitting arrangement for transmitting samples of a digital baseband signal of a wireless communication network is provided, the transmitting arrangement comprising a sample input operable for receiving samples of the digital baseband signal; a local clock operable for determining a current time; a timestamp generator operable for generating at least one timestamp depending on the current time, the timestamp being associated with at least one sample; and an output operable for outputting a signal, the signal including the samples and the at least one timestamp. By generating the signal comprising not only the sample but also the timestamp, an asynchronous transmission medium such as a switched network comprising packet or frame switches with packet buffers can be used for the transport of the signal. Due to the timestamps a receiving arrangement can reconstruct the original synchronous digital baseband signal. Using the switched network allows for statistically multiplexing the signal with other packet of frame flows or further signals comprising samples of a different digital baseband signal. Statistically multiplexing increases the mean utilization of the transmission resources of the switched network and therefore allows implementing an efficient communication network.

In an embodiment, the local clock comprises time reference circuitry including a time reference receiver for receiving a time reference signal, preferably a GPS signal.

In an embodiment, the timestamp indicates a scheduled transmission time of the sample to which the timestamp is associated and/or the transmitter is operable for transmitting at least some samples independently of their scheduled transmission time. Transmitting the at least one sample independently of the scheduled transmission time allows to transmit the samples as soon as they are available for transmission, e.g. as soon as they have been generated e.g. by a baseband signal processing device. Thus, the at least one sample may be transmitted some time before the scheduled transmission time. Therefore, variations e.g. in the transport delay of the switched network have no or little impact on the quality of the reconstructed digital baseband signal. Moreover, a transmit buffer in the transmitting arrangement is not needed.

In one embodiment, the timestamp is associated with a single sample, preferably with each sample. In another embodiment, the timestamp is associated with a group of consecutive samples. Associating the timestamp to the group of samples allows for packaging multiple samples into one data block that may be transmitted in one data protocol unit (e.g. frame or packet) over the switched network.

In an embodiment, the signal includes at least one common baseband signal pattern to be transmitted by multiple RF transmission devices and at least one specific baseband signal pattern to be transmitted by a single RF transmission device. For example, the common baseband signal pattern may include at least a part of a broadcast television signal or a common part of a signal to be transmitted using Coordinated Multipoint transmission (CoMP). The RF transmission device may be a remote radio head of the wireless network.

According to another preferred embodiment, a method for transmitting a signal of a wireless communication network is provided, the method comprising receiving samples of a digital baseband signal; determining a current time; generating at least one timestamp depending on the current time, the timestamp being associated with at least one sample; and outputting the signal, the signal including the samples and the at least one timestamp.

In embodiment, the method is executing by the transmitting arrangement described herein. According to another embodiment, a transmitting arrangement arranged for executing the method for transmitting said signal of a wireless communication network is provided.

According to yet another preferred embodiment, a receiving arrangement for receiving a signal of a wireless communication network is provided, the receiving arrangement comprising a signal input operable for receiving the signal, the signal including samples of a digital baseband signal and at least one timestamp, the timestamp being associated with at least one of said samples; a local clock running independently of the received signal and operable for determining a current time; a signal generator for outputting the digital baseband signal, the signal generator being operable for outputting at least one sample at an instant of time that depends on the timestamp and the current time. The receiving arrangement may be arranged for receiving the signal transmitted by the transmitting arrangement and for reconstructing the digital baseband signal from the received signal.

In an embodiment, the receiving arrangement comprises a signal processor arranged to receive a set of transformation parameters, the set of transformation parameters describing how to transform the digital baseband signal into at least one further digital baseband signal, and to transform the digital baseband signal depending on the set of transformation parameters. The receiving arrangement according to this embodiment may be arranged for generating one or more further digital baseband signals by transforming the digital baseband signal characterized by the signal transmitted by the transmitting arrangement, said transforming depending on the transformation parameters. Therefore, multiple further baseband signals may be generated that may be required e.g. for energizing multiple antennas of an antenna array. For example, beamforming may be implemented by energizing multiple antennas depending on said further digital baseband signals.

Accordingly, the transmitting arrangement or another network element of the wireless network may include a transformation parameter generator that is arranged for generating the set of transformation parameters. The set of transformation parameters may be transported to the receiving arrangement over the switched network. In an embodiment, the set of transformation parameters may be included in the same data block or protocol data units in which the samples are included. In another embodiment, they are transmitted using a flow of protocol data unit that is separate from a flow of protocol data units comprising the signal (i.e. the samples and the timestamps).

In an embodiment, the receiving arrangement comprises a signal pattern buffer for storing at least one baseband signal pattern and the receiving arrangement is operable for outputting the at least one baseband signal pattern depending on a receipt of an indication that indicates when the at least one baseband signal pattern shall be output. Thus, recurring signal patterns may be stored in the signal pattern buffer and sent out over the air interface repeatedly without the need to transport them multiple times over the switched network. In an embodiment, the receiving apparatus is arranged for receiving the at least one baseband signal pattern and for storing the received baseband signal pattern in the signal pattern buffer. In an embodiment, the indication may indicate which baseband signal pattern stored in the pattern buffer shall be sent out.

Accordingly, in an embodiment, the transmitting arrangement or another network element of the wireless network may be arranged for transmitting the baseband signal patterns and/or said indication to the receiving arrangement.

According to another embodiment, a method for reconstructing a digital baseband signal of a wireless communication network is provided, the method comprising receiving a signal, the signal including samples of the digital baseband signal and at least one timestamp, the timestamp being associated with at least one of said samples; determining a current time by a local clock running independently of the received signal; and generating the digital baseband signal by outputting at least one sample at an instant of time that depends on the timestamp and the current time.

Preferably, the method may be executed by a receiving arrangement described herein. According to an embodiment, a receiving arrangement arranged for executing the method for reconstructing the digital baseband signal is provided.

According to yet another embodiment, a gateway device for interconnecting a baseband processing device and a remote radio head of a wireless communication network with each other is provided, the gateway device comprising the receiving arrangement described herein arranged for receiving a downlink signal including samples and timestamps from the baseband processing device and for forwarding a downlink digital baseband signal reconstructed from the received signal to the remote radio head; and a transmitting arrangement described herein arranged for receiving an uplink digital baseband signal from the remote radio head and outputting an uplink signal including samples and timestamps to the baseband processing device.

According to still another embodiment, a baseband signal processing device of a wireless communication network operable for generating samples of a downlink digital baseband signal destined to a remote radio head of the communication network and for receiving samples of an uplink digital baseband signal originating from the remote radio head is provided, wherein the baseband signal processing device comprises a transmitting arrangement described herein arranged for receiving samples of the downlink digital baseband signal and outputting an downlink signal including the samples and the timestamps; and a receiving arrangement described herein arranged for receiving an uplink signal including samples and timestamps and regenerating the samples of the uplink digital baseband signal. The receiving arrangement may regenerate the digital baseband signal from the uplink signal.

According to a further embodiment, a computer program product, preferably a computer readable storage medium is provided, the computer program product comprising a computer program programmed for executing a method described herein when run on a computer. The computer readable storage medium may include semiconductor memory, magnetic storage media or optical storage media. Furthermore, the computer program product, preferably the computer program, may be provided by a server for download.

### Brief description of the figures

Exemplary embodiments and further advantages of the present invention are shown in the Figures and described in detail hereinafter.
- Figure 1: shows a wireless communication network according to a first embodiment;
- Figure 2: shows an uplink transmission path and a downlink transmission path within a virtual base station of the network of Figure 1;
- Figure 3: shows a transmitting arrangement for transmitting a signal comprising samples of a digital baseband signal and timestamps associated with the samples;
- Figure 4: shows a receiving arrangement for receiving the signal transmitted by the transmitting arrangement of Figure 3 and regenerating the digital baseband signal;
- Figure 5: shows a part of a wireless communication network according to a second embodiment; and
- Figure 6: shows a part of a wireless communication network according to a third embodiment.

### Description of the embodiments

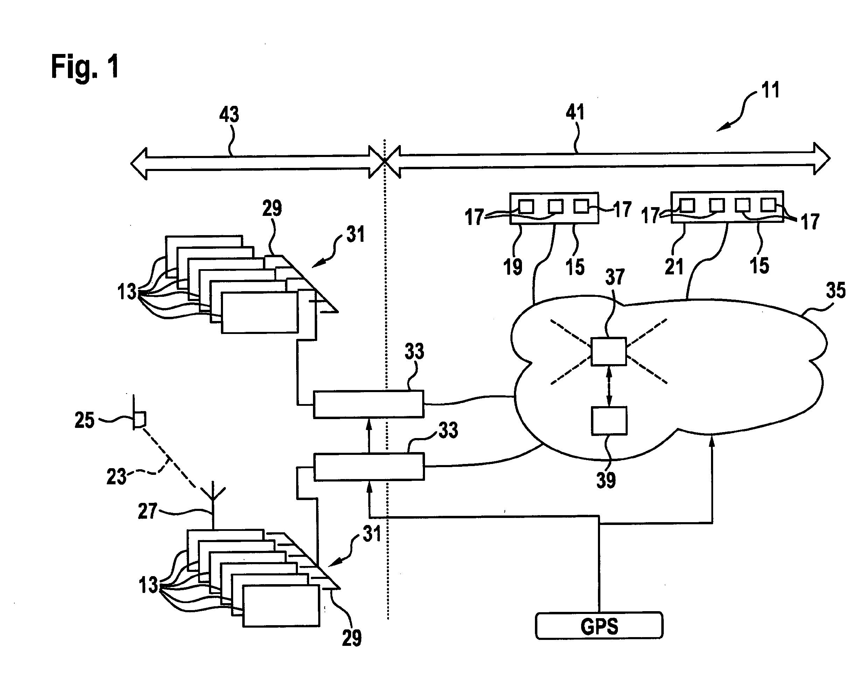

Figure 1 shows a radio access network 11 according to an embodiment of the present invention. The network 11 comprises one or more remote radio heads 13 and at least one cluster 15 with each cluster 15 including one or more baseband processing devices 17 arranged for performing baseband processing. Baseband processing may include signal processing, e.g. modulation, coding, beamforming, coordinated multipoint transmission (CoMP), etc., and/or processing of communication protocols of the network 11. In the shown embodiment, the network 11 has different clusters 15 with each cluster 15 performing a certain type of functions to be carried out in the network 11. In particular, a first cluster 19 is arranged for performing a physical layer processing, in particular signal processing. A second cluster 21 is operable to perform protocol operations such as MAC protocol signaling. However, the present invention is not limited to embodiments according to which at least one cluster 15 is dedicated to a certain type of functions. In another embodiment, at least one cluster 15 is operable to perform multiple types of functions or all baseband processing functions of the network 11.

The remote radio heads 13 are arranged for communicating over an air interface 23 with at least one mobile terminal 25. Therefore, the remote radio head 13 comprises a radio frequency (RF) transceiver (not shown) that may be connected with an antenna 27. Each remote radio head 13 has a baseband port 29 connected via an interconnection arrangement 31 to a gateway 33. In the shown embodiment, a group of remote radio heads 13 is connected to a single gateway 33. Because the shown network 11 has two groups of remote radio heads 13, two gateways 33 are provided. Each gateway 33 is connected to a switched network 35 of the access network 11. Because the baseband processing devices 17 of the clusters 15 are also connected to the switched network 35, the gateways 33 may communicate with the baseband processing devices 17 over the switched network 35 and with the remote radio heads 13 over the interconnection arrangement 31. That is, the gateways 33 couple the remote radio heads 13 with the baseband processing devices 17 of the clusters 15.

The switched network 35 may be a packet switched network including at least one packet switch 37. In the shown embodiment, the switched network 35 is a 10GB Ethernet network. More specifically, the switched network 35 has a Software Defined Networking (SDN) architecture, i.e. at least a part of control plane functions of the switched network 35 may be performed by a controller 39 which is separate from the packet switch 37. Consequently, the switch 37 performs user plane operations, such as frame or packet forwarding, under the control of the controller 39. For example, the packet switch 37 and a controller 39 may be coupled with each other and interwork with each other according to the OpenFlow specification (see www.openflow.org). However, the present invention is not limited to this type of switched network 35. In particular, instead of using SDN, a conventional switched network may be applied. Furthermore, the invention is not limited to Ethernet; any type of network, in particular switched network, may be applied to connect the clusters 15 and the gateways 33 with each other. Because the switched network 35 typically includes packet buffers which are normally located in the switch 37, a packet transport delay of packets transmitted between the gateways 33 and the clusters 15 depends on a momentary size of the packet buffer, which in turn depends on the current network load. As a consequence, there is no strict temporal relationship between a transmission of a packet at one node 15, 33 in the switched network 35 and the reception of that packet at another node 33, 15. Therefore, a part of the access network 11 including the switched network 35, the clusters 15 and a part of the gateways 33 is referred to as asynchronous part 41 of the access network 11.

In contrast to the switched network 35, the interconnection arrangement 31 guarantees a rather strict temporal relationship of the instant when a packet is transmitted by one node 29, 33 connected to the interconnection arrangement 31 and a reception time of that packet at another node 33, 29 connected to the interconnection arrangement 31. Accordingly, the interconnection arrangement and the nodes 13, 33 connected to it belong to a synchronous part 43 of the network 11. The gateways 33 interconnect the asynchronous part 41 and the synchronous part 43 und thus belong to both the asynchronous part 41 and the synchronous part 43.

In the shown embodiment, this strict temporal relationship is achieved by avoiding statistical multiplexing of packets transmitted over the interconnection arrangement 31. Accordingly, the interconnection arrangement 31 may include point-to-point links between the remote radio head 13 and the gateway 33. In addition or alternatively to the point-to-point links, a dedicated amount of transmission resources of the interconnection arrangement 31 may be applied to the individual pairs of remote radio heads 13 and gateways 33. For instance, the wavelength division multiplex (WDM) may be applied and each pair of remote radio heads 13 and gateway 33 of a single interconnection arrangement 31 may have a dedicated wavelength.

When operating the access network 11, the clusters 15 and the remote radio head 13 cooperate with each other in order to perform downlink transmissions, uplink transmissions or other operations of a base station. That is, the clusters 15 and the remote radio head 13 form a distributed base station of the access network 11. Because baseband processing is performed by the baseband processing devices 17 of the clusters 15, the network 11 comprising at least one distributed base station is also referred to as "virtual radio access network" or "cloud radio access network". The remote radio head 13 is not required to be aware of the exact association of baseband processing tasks to the individual baseband processing devices 17.

The baseband processing devices 17 can identify and contact any remote radio head 13 based on an address (e.g. an IP address and/or a port number of an IP-based transport protocol such as UDP or TCP). Known quality of service mechanisms can be used in the switched network 35 in order to guarantee e.g. a maximum transport delay or maximum Round Trip Time (RTT) of packets to be transported over the switched network 35. Consequently, dedicated allocation of transmission resources, e.g. by using point-to-point links is only required in the synchronous part 43 of the access network 11, whereas known quality of service mechanism are sufficient in the asynchronous part 41 of the access network 11. Moreover, nodes of the asynchronous part 41 of the network 11, in particular the baseband processing devices 17, may be implemented as microcomputers having a general purpose micro processor and e.g. a conventional Ethernet interface. In particular, standard Personal Computer (PC) technology may be applied to implement the clusters 15 or the baseband processing devices 17. Microcomputers with general purpose processors, in particular the PC computer architecture, typically allow for baseband processing with a high throughput due to their comparatively high computing capacity but typically cannot comply with strict timing requirements of the communication with the remote radio heads 13 over the interconnection arrangement 31. By using a timestamp-based approach, which will be explained in detail below, it is possible to comply with the strict timing requirements in the synchronous part 43 and using equipment that can comply with less strict timing requirements only in the asynchronous part 41, such as the switched network 45 and the clusters 15.

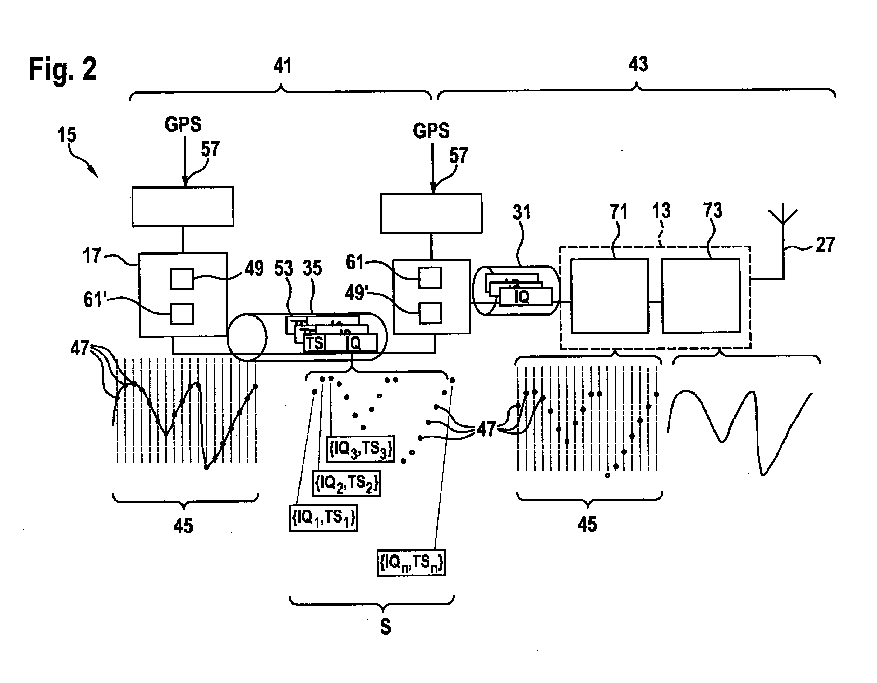

Referring to Figure 2, the operation of the radio access network 11 is described in more detail. When performing a downlink transmission, a baseband processing device 17 generates data, e.g. signaling data, or receives data such as payload data, e.g. from a core network or from a different baseband processing device 17. Depending on the received or generated data, the baseband processing device 17 generates a digital baseband signal 45. In the shown embodiment, the digital baseband signal 45 is represented in the time domain, i.e. the digital baseband signal 45 comprises equidistant samples with an interval between two consecutive samples corresponding to a sampling interval Ts. In the shown embodiment, the digital baseband signal is a complex valued signal, each sample 47 comprising a value of a real part of the sample and the value of an imaginary part of the sample. Thus, the samples 47 are also referred to as IQ samples. A transmitting interface arrangement 49 of the baseband processing device 17 receives the digital baseband signal 45 including the samples 47.

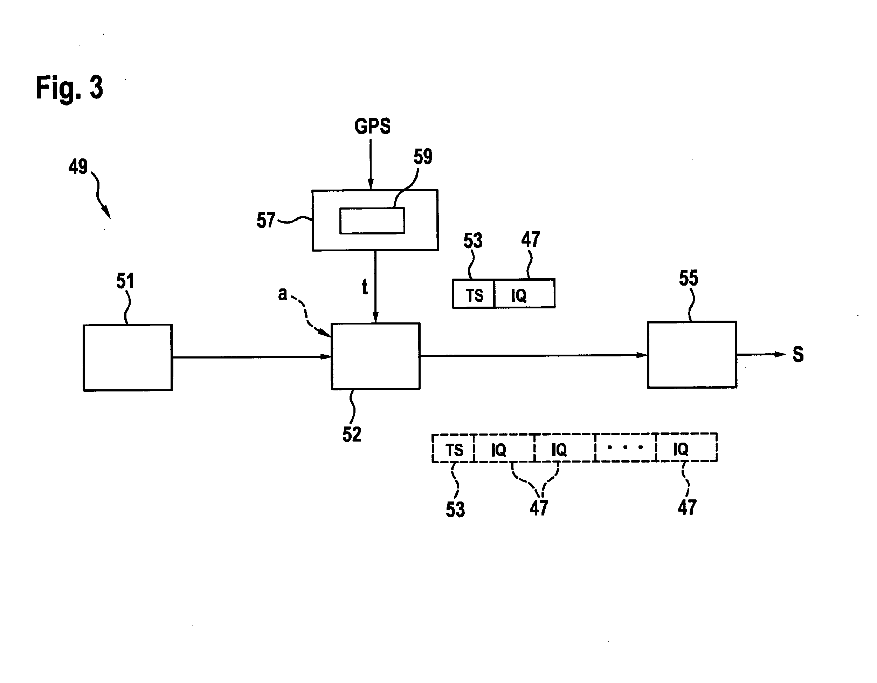

As shown in Figure 3, the transmitting interface arrangement 49 comprises a sample receiver 51 for receiving the samples 47 of the digital baseband signal 45. Furthermore, the transmitting interface arrangement 49 includes timestamp generator 52 for generating at least one timestamp 53 and for associating the timestamp 53 to at least one sample 47. In one embodiment, the timestamp generator 52 may generate pairs of samples 47 and the respective timestamp 53 associated with that sample 47. The pair of the timestamp 53 and the sample 47 may be included in a data block. One or more of such data blocks may be included in a packet (e.g. IP packet or Ethernet frame) to be transmitted over the switched network 35. In another embodiment, the timestamp 53 may be associated with a group of samples 47, preferably with a group of consecutive samples 47, as shown in dashed lines in Figure 3. An output 55 of a transmitting interface arrangement 49 is arranged for outputting a signal S that includes the samples 47 and the timestamps 53.

In addition, the transmitting interface arrangement 49 comprises a local clock 57. The local clock 57 may include time reference circuitry 59 for receiving a time reference signal such as a GPS signal (labeled with GPS in Figure 3). The timestamp generator 52 uses a current time t determined by the local clock 57 in order to calculate the value of each timestamp 53. In one embodiment, the timestamp generator 52 just calculates a value that characterizes a current time t as the timestamp 53. In another embodiment the timestamp generator 52 not only uses the current time t but also additional information a related to the transmission time of the samples 47. The additional information a may be generated by the baseband processing device 17 which generates the samples 47. Using the current time t and the additional information a, the timestamps 53 are calculated such that they describe the transmission time when the respective samples 47 shall be transmitted by the gateway 33 to be received by the remote radio head 13 (scheduled transmission time). Consequently, the timestamps do not depend on a transport delay of the switched network 35.

In the embodiment using the additional information a, the baseband processing device 17 may generate the samples 47 before the scheduled transmission time and forwarding them immediately to the timestamp generator 52. For example, the additional information a may include a time interval between the current time t and the scheduled transmission time. The signal S output by the signal output 55 is transmitted over the switched network 35 to the gateway 33.

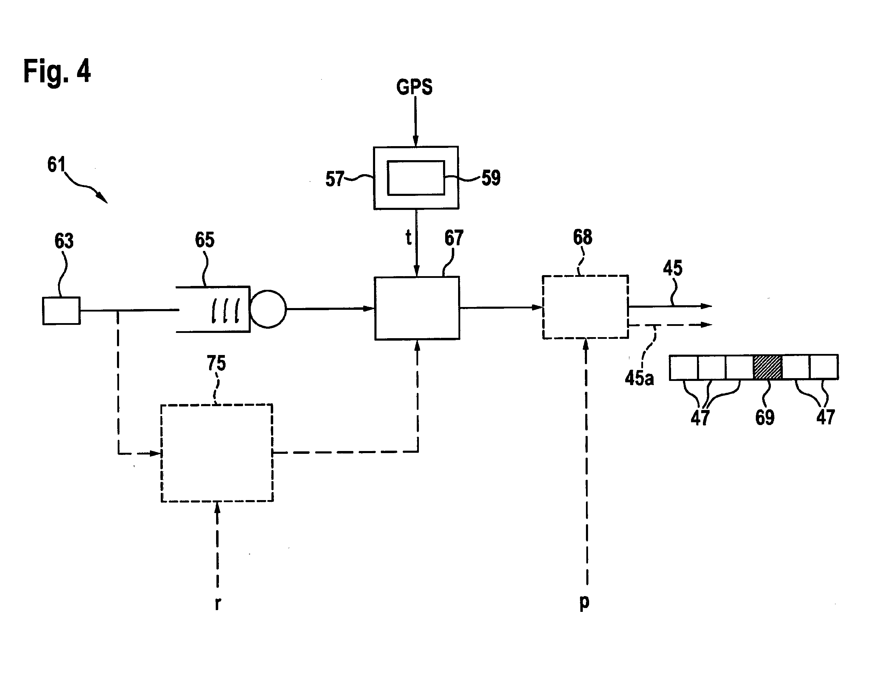

The gateway 33 has a receiving arrangement 61 for receiving the signal S and regenerating the digital baseband signal 45. As shown in Figure 4, the receiving arrangement 61 has a signal input 61 for inputting the signal S including the samples 47 and the timestamps 53. The samples 47 and the respective timestamps 53 are stored in a signal input buffer 65 of the receiving arrangement 61. A signal generator 67 of the receiving arrangement 61 is arranged for generating the digital baseband signal 45 depending on the samples 47 and timestamps 53 of the signal S. To this end, the signal generator 67 can remove the samples 47 and the respective timestamps 53 from the signal input buffer 65. In particular, the signal generator 67 generates a sample 47 of the digital baseband signal 45 as soon as the scheduled transmission time described by the timestamp 53 of the corresponding sample 47 of the signal S corresponds to the current time t. The scheduled transmission time is the time when a certain sample 47 shall be outputted by the receiving arrangement 61 to the interconnection arrangement 31.

As a consequence, the signal generator 67 generates the baseband signal 45 according to the scheduled transmission time determined by the baseband processing device 17 and included into the signal S by the timestamp generator 52. In order to determine the current time t, the receiving arrangement 61 may comprise a local clock 57 at least similar to the local clock 57 of the transmitting arrangement. The local clock 57 is arranged for running independently of the received signal S; the local clock 57 does not need the signal S to be present or to comply with certain timing requirements in order to operate correctly. In particular, the local clock 57 may include time reference circuitry 59 to receive a time reference signal such as a GPS signal. In the preferred embodiment, both the transmitting arrangement 49 and the receiving arrangement 61 generate their current time t depending on the same time reference signal (e.g. GPS signal) in order to achieve a synchronization of the local clocks 57 of the two arrangements 49,61 with each other.

In the preferred embodiment, the signal generator 67 is arranged for retrieving the samples 47 from signal input buffer 65 in an ascending order of their timestamps 53. Retrieving the samples 47 in the ascending order from of the timestamps 53 the signal input buffer 65 has the effect that the baseband signal 45 is not distorted even if packet reordering in the switched network 35 occurs. Using the input buffer 65 allows thus for reordering samples that have been received out of sequence.

Due to packet loss in the switched network 35, one or more samples 47 may be lost during their transmission over the switched network 35. Thus, the signal generator 67 may be arranged for correct loss of samples 47, e.g. by inserting at least one further sample 69. This further sample 69 may have a predefined value (e.g. zero) or may be interpolated using the values of other samples 47, preferably neighboring samples 47.

In an embodiment, the baseband processing device 17 may stop generating samples 47 while no radio signal has to be transmitted over the air interface 23. In this case, the timestamp generator 52 will not output samples 47 or timestamps 53 anymore and the signal S will not be transmitted over the switched network 35. When the receiving arrangement 61 does not receive the signal S, the signal generator 67 may generate a sequence of further samples 69 in cases where the remote radio head 13 requires a continuous baseband signal 45 in order to generate an internal clock signal.

The digital baseband signal 45 is then transmitted over the interconnection arrangement 31, e.g. a point-to-point link between the gateway 33 and the remote radio head 13, and received by the remote radio head 13. Because the interconnection arrangement 31 belonging to the synchronous part 43 complies with strict timing requirements, a conventional digital baseband signal interface such as CPRI or OBSAI may be applied for the communication between the gateways 61 and the remote radio head 13. A digital to analog and analog to digital converter 71 of the remote radio head 13 generates an analog baseband signal and RF-circuitry 73 generates an RF-signal to be transmitted via the antenna 27 over the air interface 23 to the terminal 25.

Using the timestamps 53 allows transmitting the samples 47 over the switched network as soon as they have been generated by the baseband processing device 17 and thus for reducing the impact of a transmission delay over the switched network 35. As a consequence, signal integrity can be optimized by carefully dimensioning computation speed, transmission delay over a switched network 35 and the size of the signal input buffer 65 of the gateway 33. As a result, a fast enough computation in the baseband processing device 17 can compensate for comparatively long and in-deterministic transmission delays in the switched network 35, allowing the use of a much broader spectrum of topologies and technologies, and relaxing the requirements from hard real time constraints to quality of service constraints concerning mainly average values of transmission delay and bitrates. The network 11 is robust with respect to loss of some samples 47 because the missing sample can be detected by analyzing the timestamps 53 and the digital baseband signal 45 can be reconstructed if necessary, as described above.

In the shown embodiment, the digital baseband signal 45 is represented in the time domain in the form of a sequence of IQ samples 47. However, the present invention is not limited to that representation of the baseband signal 45. Instead of the IQ samples 47, a different representation of the baseband signal 45 may be used on the interconnection arrangement 31, from which representation the sequence of IQ samples may be derived. The digital baseband signal 45 may comprise the samples 47 arranged at equidistant time instances with a distance between the samples 47 corresponding to a sampling interval Ts. Because of the regular and equidistance arrangement of the samples 47 in the time domain, the digital baseband signal does not need timestamps. Thus, in the shown embodiments, the digital baseband signal does not include timestamps.

For uplink transmissions, the gateway 33 has a transmitting arrangement 49' and the baseband processing device 17 has a receiving arrangement 61'. In the shown embodiment, the transmitting arrangement 49 does not generate the further information a and the timestamp generator 52 generates the timestamps 53 depending on the current time t only in order to record the actual time of reception of the corresponding samples 47 at the interconnection arrangement 31.

An uplink transmission path begins at a terminal 25 which transmits an RF-signal over the air interface 23. The remote radio head 13 receives the RF-signal via the antenna 27. The RF-circuitry 73 processes the RF-signal and converts it into analog baseband signal which is converted by the converter 71 into an uplink digital baseband signal 45. The remote radio head 13 transmits the uplink digital baseband signal 45 over the interconnection arrangement 31 to the gateway 33. The gateway 33 passes the uplink digital baseband signal 45 to the further transmitting interface arrangement 49' which generates the signal S. The signal S is transmitted over the switched network 35 to the baseband processing device 17. The further receiving arrangement 61 of the baseband processing device 17 reconstructs the uplink digital baseband signal 45.

As shown e.g. in Figure 2, the shown embodiment uses the GPS signal as a common time reference for both the baseband processing device 17 and the gateway 33. The gateway 33 can therefore receive the UTC time (in seconds) in two synchronized signals: a pulse per second (PPS) signal and a 10 MHz clock signal. By combining this information, the gateway 33 may generate the timestamps 53 with a precision of 10⁻⁷ s. If higher precisions are needed, phase locked loops (PLLs) or other components can be used to multiply the GPS clock rate to reach the desired frequency needed for the higher precision.

In the embodiment shown in Figures 1 and 2, the gateway 33 and the remote radio head 13 are separate network elements connected with each other with a comparatively long interconnection arrangement 31 such as a point-to-point link of several meters or more. However, in another embodiment, the gateway 33 is integrated into the remote radio head 13. That is, the remote radio heads 13 and the gateway 33 from a single network element or device. The remote radio head 13 and the gateway 33 may be included in a single case. Such a remote radio head 13 may have a simplified interconnection arrangement 31, which is also integrated into the remote radio head 13, the simplified interconnection arrangement 31 may comprise a simple optical or electrical point-to-point link. On the integrated interconnection arrangement, complex and/or standardized interfaces such as CPRI or OPRSI can be avoided and other or simpler interfaces may be implemented.

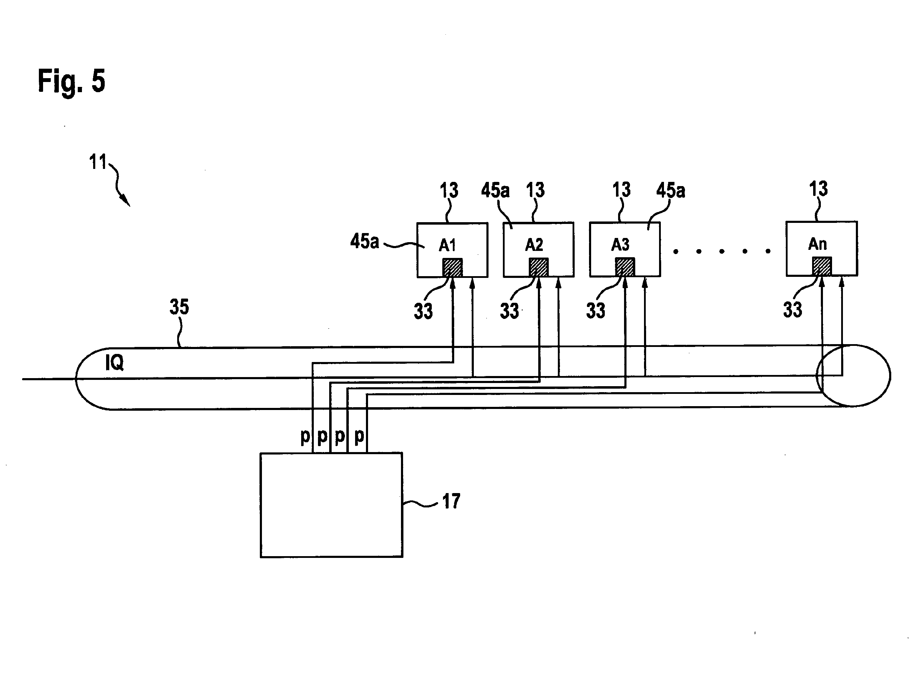

Figure 5 shows a radio access network 11 having remote radio heads 13 with integrated gateways 33. In the shown example, n remote radio heads 13 transmit radio signals depending on n further digital baseband signals 45a that are calculated by means of a signal processing algorithm depending on the digital baseband signal 45. An exemplary application of such a set of derived further baseband signals is beam-forming, where each antenna needs at least one different further baseband signal 45a which is obtained by applying a well-defined skew/transformation on the digital baseband signal 45. In order to avoid simultaneous transmissions of all further baseband signals over the switched network 35, a signal processor 68 of the receiving arrangement 61 of the gateway 33 has an input for inputting a set of transformation parameters p which describe how to transform the digital baseband signal 45 into the further digital baseband signals45a to be used within the individual remote radio heads. The signal processor 68 of the receiving arrangement 61 in the downlink signal path is arranged for receiving a set of transformation parameters p and to transform the digital baseband signal 45 into a further digital baseband signal 45a depending on the set of transformation parameters related to that further digital baseband signal 45a.

The baseband processing device 17 may transmit a different set of transformation parameters p to the gateways 33 of the individual remote radio heads 13 in order to instruct the individual remote radio heads 13 to transform the digital baseband signal 45 in a different way so as to generate multiple different further baseband signals 45a at different remote radio heads 13. The digital baseband signal 45 may be multicasted over the switched network 35 to the remote radio heads 13. During signal transmission, each gateway 33 integrated in the radio head 13 transforms the digital baseband signal 35 according to the set of transformation parameters p.

Furthermore, the receiving arrangement 61 of the gateway 33 may comprise a signal pattern buffer 75 for storing sequences of samples 47 of recurring signal patterns such as pilot signals or the like. Such signal patterns are transmitted regularly from the access network 11 to the terminals 25 so that terminals 25 entering the network 11 can identify a (virtual) base station implemented in the network 11 and interact with the base station. These recurring patterns are at least almost constant and typically depend on the network configuration. In an embodiment, the baseband processing device 17 transmits one or more signal patterns to the gateway 33, and the receiving arrangement 61 of the gateway 33 receives the signal patterns over the signal input 63 and stores them into the signal patterns buffer 75. When the signal patterns have been stored in the signal pattern buffer 75 then the baseband processing device 17 may just send an indication r to the gateway 33 that indicates when certain signal pattern must start. As illustrated in Figure 4, the signal generator 67 may be arranged for generating a part of the digital baseband signal 45 depending on a signal pattern stored in the pattern buffer 75. The signal generator 67 may be arranged for receiving the indication r and for generating the digital baseband signal pattern depending on a stored signal pattern identified by the indication r beginning at a time instant specified in the indication r. Consequently, redundant transmissions of the signal patterns over the switched network 35 can be avoided.

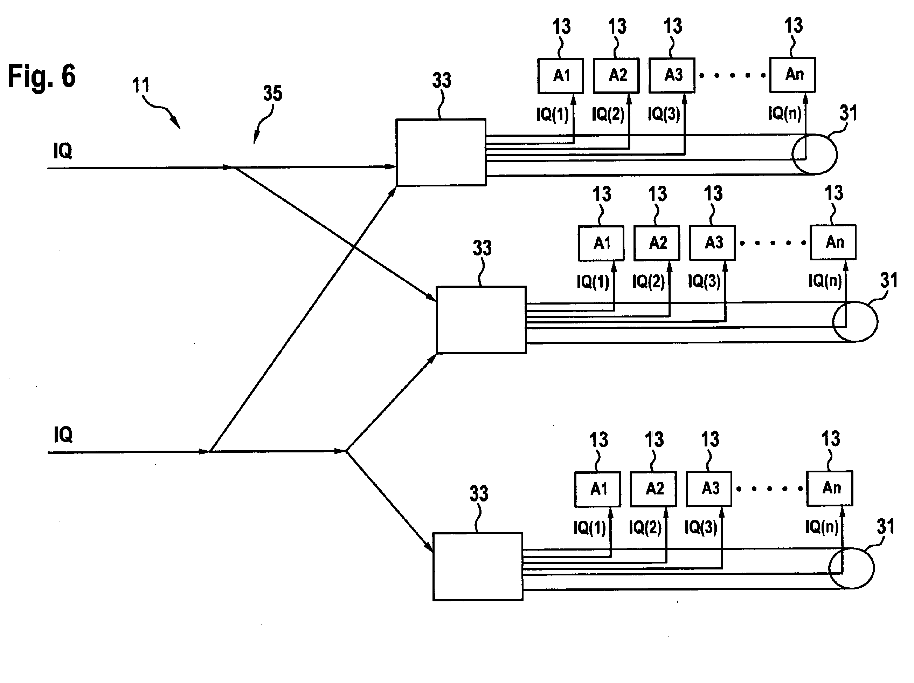

Figure 6 shows a scenario where multiple remote radio heads 13 transmit different signals but each of the different signals have a common part which is identical for each of this group of multiple remote radio heads 13. A common part of the signal may include common content destined to multiple terminals 25 such as broadcast TV. When transmitting broadcast TV over the access network 11, some data are broadcasted to several terminals 25 in various radio cells simultaneously.

Furthermore, using Coordinated Multipoint transmission (CoMP) may lead to multiple baseband signals to be transmitted to different remote radio heads 13, which multiple signals have an identical common part. In a certain variant of CoMP called joint processing, spatial diversity from different antenna systems connected to different remote radio heads 13 is ensured either non-coherently (e.g. sending complementary Forward Error Correction (FEC) parity bits at the input of the channel decoder) or coherently (e.g. in phase combining at the input of the demodulator). For coherent joint processing, the same radio symbols must be inserted in this stream at the same time by various antenna systems participating to the joint processing. This same radio symbols form a common part of the signal to be transmitted to different remote radio heads 13.

In the embodiment shown in Figure 6, the common part of the signals is transmitted by multicast to the gateways 33 and the remaining part of the signals, which is specific to each remote radio head 13 of a set multiple radio heads 13 is transmitted by unicast to the gateways 33 connected to the remote radio heads 13. Using multicast for the common part of the signals reduces bandwidth needs in the switched network 35.

To sum up, the embodiments described herein allow for transmission of the samples 47 asynchronously over the asynchronous part 41 of the network 11, in particular over the switched network 35. The gateway 33 is located as closely as possible to the remote radio head 13. The gateway 33 translates the asynchronous packet or frame flow (signal S) into a synchronous IQ sample stream (digital baseband signal 45). Asynchronous transmission of the samples 47 is enabled by using a common time reference. The samples 47 are time stamped with their scheduled transmission time or their exact reception time, respectively, before being sent over the asynchronous connection provided by the switched network 35. The gateway 33 uses the timestamps 53 to regenerate the synchronous flow of samples 47, i.e. the digital baseband signal 45.

## Claims

1. Transmitting arrangement (49) for transmitting samples (47) of a digital baseband signal (45) of a wireless communication network (11), the transmitting arrangement (49) comprising
- a sample input (51) operable for receiving the samples of the digital baseband signal (45);
- a local clock (57) operable for determining a current time (t);
- a timestamp generator (52) operable for generating at least one timestamp (53) depending on the current time (t), the timestamp (53) being associated with at least one sample (47); and
- an output (55) operable for outputting a signal (S) of the wireless communication network (11) to a receiving arrangement (61) for receiving the signal (S), the signal (S) including the samples (47) and the at least one timestamp (53);
**characterized in that** the transmitting arrangement (49) is arranged for transmitting at least one baseband signal pattern to the receiving arrangement (61) and for transmitting an indication (r) to the receiving arrangement (61), the indication (r) indicating when the at least one baseband signal pattern shall be output by the receiving arrangement (61).

2. Transmitting arrangement (49) according to claim 1, wherein the local clock (57) comprises time reference circuitry (59) including a time reference receiver for receiving a time reference signal, preferably a GPS signal (GPS).

3. Transmitting arrangement (49) according to claim 1 or 2, wherein the timestamp (53) indicates a scheduled transmission time of the sample (47) to which the timestamp (53) is associated and/or wherein the transmitting arrangement (49) is operable for outputting at least some samples (47) independently of their scheduled transmission time.

4. Transmitting arrangement (49) according to one of the precedent claims, wherein the timestamp (53) is associated with a single sample (47), preferably with each sample (47) or to a group of consecutive samples (47).

5. Transmitting arrangement (49) according to one of the precedent claims, wherein the signal (S) includes at least one common baseband signal pattern to be transmitted by multiple RF transmission devices (13) and at least one specific baseband signal pattern to be transmitted by a single RF transmission device (13).

6. Method for transmitting a signal (S) of a wireless communication network, the method comprising
- receiving samples (47) of a digital baseband signal (45);
- determining a current time (t);
- generating at least one timestamp (53) depending on the current time (t), the timestamp (53) being associated with at least one sample (47); and
- outputting the signal (S) to a receiving arrangement (61) for receiving the signal (S), the signal (S) including the samples (47) and the at least one timestamp (53);
**characterized in that** the method comprises transmitting at least one baseband signal pattern to the receiving arrangement (61) and transmitting an indication (r) to the receiving arrangement (61), the indication (r) indicating when the at least one baseband signal pattern shall be output by the receiving arrangement (61).

7. Method according to claim 6, wherein the method is executed by a transmitting arrangement (49) according to one of claims 1 to 5.

8. Receiving arrangement (61) for receiving a signal (S) of a wireless communication network (11), the receiving arrangement (61) comprising
- a signal input (63) operable for receiving the signal (S), the signal including samples (47) of a digital baseband signal (45) and at least one timestamp (53), the timestamp (53) being associated with at least one of said samples (47);
- a local clock (57) running independently of the received signal (S) and operable for determining a current time (t); and
- a signal generator (67) for outputting the digital baseband signal (45), the signal generator (67) being operable for outputting at least one sample (47) at an instant of time that depends on the timestamp (53) and the current time (t);
**characterized in that** the receiving arrangement (61) comprises a signal pattern buffer (75) for storing at least one baseband signal pattern and wherein the receiving arrangement (61) is operable for outputting the at least one baseband signal pattern depending on a receipt of an indication (r) that indicates when the at least one baseband signal pattern shall be output.

9. Receiving arrangement (61) according to claim 8, wherein the receiving arrangement (61) comprises a signal processor (68) arranged to receive a set of transformation parameters (p), the set of transformation parameters (p) describing how to transform the digital baseband signal (45) into at least one further digital baseband signal (45a), and to transform the digital baseband signal (45) depending on the set of transformation parameters (p).

10. Method for reconstructing a digital baseband signal (45) of a wireless communication network (11), the method comprising
- receiving a signal (S), the signal (S) including samples (47) of the digital baseband signal (45) and at least one timestamp (53), the timestamp (53) being associated with at least one of said samples (47);
- determining a current time (t) by a local clock (57) running independently of the received signal (S); and
- generating the digital baseband signal (45) by outputting at least one sample (47) at an instant of time that depends on the timestamp (53) and the current time (t);
**characterized in that** the method comprises storing at least one baseband signal pattern in a signal pattern buffer (75) and outputting the at least one baseband signal pattern depending on a receipt of an indication (r) that indicates when the at least one baseband signal pattern shall be output.

11. Method according to claim 10, wherein the method is executed by a receiving arrangement according to claim 8 or 9.

12. Gateway device (33) for interconnecting a baseband processing device (17) and a remote radio head (13) of a wireless communication network (11) with each other, the gateway device (33) comprising
- a receiving arrangement (61) according to claim 8 or 9 for receiving a downlink signal (S) including samples (47) and timestamps (53) from the baseband processing device (17) and for forwarding a downlink digital baseband signal (45) reconstructed from the received downlink signal (S) to the remote radio head (13); and
- a transmitting arrangement (49') for receiving an uplink digital baseband signal (45) from the remote radio head (13) and outputting an uplink signal (S) including samples (47) and timestamps (53) to the baseband processing device (17), wherein the transmitting arrangement (49) comprises a sample input (51) operable for receiving the samples of the uplink digital baseband signal (45); a local clock (57) operable for determining a current time (t); a timestamp generator (52) operable for generating at least one timestamp (53) depending on the current time (t), the timestamp (53) being associated with at least one sample (47); and an output (55) operable for outputting an uplink signal (S), the uplink signal (S) including the samples (47) and the at least one timestamp (53).

13. Baseband signal processing device (17) of a wireless communication network (11) operable for generating samples (47) of a downlink digital baseband signal (45) destined to a remote radio head (13) of the communication network (13) and for receiving samples (47) of an uplink digital baseband signal (45) originating from the remote radio head (13), wherein the baseband signal processing device (17) comprises
- a transmitting arrangement (49) according to one of claims 1 to 5 for receiving samples (47) of the downlink digital baseband signal (45) and outputting a downlink signal (S) including the samples (47) and the timestamps (53); and
- a receiving arrangement (61') for receiving an uplink signal (S) including samples (47) and timestamps (53) and regenerating the samples (47) of the uplink digital baseband signal (45), wherein the receiving arrangement (61) comprises a signal input (63) operable for receiving the uplink signal (S), the uplink signal including samples (47) of an uplink digital baseband signal (45) and at least one timestamp (53), the timestamp (53) being associated with at least one of said samples (47); a local clock (57) running independently of the received uplink signal (S) and operable for determining a current time (t); and a signal generator (67) for outputting the uplink digital baseband signal (45), the signal generator (67) being operable for outputting at least one sample (47) at an instant of time that depends on the timestamp (53) and the current time (t).

14. Computer program product comprising a computer program programmed for executing a method according to claim 6, 7, 10 or 11 when run on a computer.

## Patentansprüche

1. Übertragungsanordnung (49) zur Übertragung von Proben (47) eines digitalen Basisbandsignals (45) eines drahtlosen Kommunikationsnetzwerks (11), wobei die Übertragungsanordnung (49) umfasst:
- Einen Probeneingang (51), betreibbar für den Empfang der Proben des digitalen Basisbandsignals (45);
- einen lokalen Taktgeber (57), betreibbar für die Ermittlung einer aktuellen Zeit (t);
- einen Zeitstempelgenerator (52), betreibbar für die Erzeugung mindestens eines Zeitstempels (53) in Abhängigkeit von der aktuellen Zeit (t), wobei der Zeitstempel (53) mit mindestens einer Probe (47) assoziiert ist; und
- einen Ausgang (55), betreibbar für die Ausgabe eines Signals (S) des drahtlosen Kommunikationsnetzwerks (11) an eine Empfangsanordnung (61) für den Empfang des Signals (S), wobei das Signal (S) die Proben (47) und den mindestens einen Zeitstempel (53) enthält;
**dadurch gekennzeichnet, dass** die Übertragungsanordnung (49) für die Übertragung mindestens eines Basisbandsignalmusters an die Empfangsanordnung (61) und für die Übertragung einer Angabe (r) an die Empfangsanordnung (61) ausgelegt ist, wobei die Angabe (r) angibt, wann das mindestens eine Basisbandsignalmuster von der Empfangsanordnung (61) ausgegeben werden soll.

2. Übertragungsanordnung (49) nach Anspruch 1, wobei der lokale Taktgeber (57) eine Zeitreferenzschaltung (59) einschließlich eines mit einer Zeitreferenz versehenen Empfängers für den Empfang eines Zeitreferenzsignals, vorzugsweise eines GPS-Signals (GPS) umfasst.

3. Übertragungsanordnung (49) nach Anspruch 1 oder 2, wobei der Zeitstempel (53) eine geplante Sendezeit der Probe (47), mit welcher der Zeitstempel (53) assoziiert ist, angibt, und/oder wobei die Übertragungsanordnung (49) betreibbar ist, um zumindest einige Proben (47) unabhängig von deren geplanter Sendezeit auszugeben.

4. Übertragungsanordnung (49) nach einem der vorstehenden Ansprüche, wobei der Zeitstempel (53) mit einer einzelnen Probe (47), vorzugsweise mit jeder Probe (47) oder einer Gruppe von aufeinanderfolgenden Proben (47), assoziiert ist.

5. Übertragungsanordnung (49) nach einem der vorstehenden Ansprüche, wobei das Signal (S) mindestens ein durch mehrfache RF-Übertragungsvorrichtungen (13) zu übertragendes gemeinsames Basisbandsignalmuster und mindestens ein durch eine einzelne RF-Übertragungsvorrichtung (13) zu übertragendes spezifisches Basisbandsignalmuster umfasst.

6. Verfahren zur Übertragung eines Signals (S) eines drahtlosen Netzwerks, wobei das Verfahren umfasst:
- Empfangen von Proben (47) eines digitalen Basisbandsignals (45):
- Ermitteln einer aktuellen Zeit (t);
- Erzeugen mindestens eines Zeitstempels (53) in Abhängigkeit von der aktuellen Zeit (t), wobei der Zeitstempel (53) mit mindestens einer Probe (47) assoziiert ist; und
- Ausgeben des Signals (S) an eine Empfangsanordnung (61) für den Empfang des Signals (S), welches die Proben (47) und den mindestens einen Zeitstempel (53) enthält;
**dadurch gekennzeichnet, dass** das Verfahren das Übertragen mindestens eines Basisbandsignalmusters an die Empfangsanordnung (61) und das Übertragen einer Angabe (r) an die Empfangsanordnung (61) umfasst, wobei die Abgabe (r) angibt, wann das mindestens eine Basisbandsignalmuster von der Empfangsanordnung (61) ausgegeben werden soll.

7. Verfahren nach Anspruch 6, wobei das Verfahren von einer Übertragungsanordnung (49) gemäß einem der Ansprüche 1 bis 5 durchgeführt wird.

8. Empfangsanordnung (61) für den Empfang eines Signals (S) eines drahtlosen Kommunikationsnetzwerks (11), wobei die Empfangsanordnung (61) umfasst:
- Einen Signaleingang (63), betreibbar für den Empfang des Signals (S), wobei das Signal Proben (47) eines digitalen Basisbandsignals (45) und mindestens einen Zeitstempel (53) enthält, wobei der Zeitstempel (53) mit mindestens einer der besagten Proben (47) assoziiert ist;
- einen lokalen Taktgeber (57), welche unabhängig von dem empfangenen Signal (S) läuft und für die Ermittlung einer aktuellen Zeit (t) betreibbar ist;
- einen Signalgenerator (67) zum Aufgeben des digitalen Basisbandsignals (45), wobei der Signalgenerator (67) für die Ausgabe mindestens einer Probe (47) zu einem Zeitpunkt, welcher von dem Zeitstempel (53) und der aktuellen Zeit (t) abhängt, betreibbar ist;
**dadurch gekennzeichnet, dass** die Empfangsanordnung (61) einen Signalmuster-Zwischenspeicher (75) zum Speichern mindestens eines Basisbandsignalmusters umfasst, und wobei die Empfangsanordnung (61) für die Ausgabe des mindestens einen Basisbandsignalmusters in Abhangigkeit von einer Angabe (r), welche angibt, wann das mindestens eine Basisbandsignalmuster ausgegeben werden soll, betreibbar ist.

9. Empfangsanordnung (61) nach Anspruch 8, wobei die Empfangsanordnung (61) einen Signalprozessor (68) umfasst, welcher für den Empfang eines Satzes von Transformationsparametern (p), wobei der Satz von Transformationsparametern (p) beschreibt, wie das digitale Basisbandsignal (45) in mindestens ein weiteres digitales Basisbandsignal (45a) umgewandelt werden soll, und für die Umwandlung des digitalen Basisbandsignals (45) in Abhangigkeit von dem Satz von Transformationsparametern (p) ausgelegt ist.

10. Verfahren zur Rekonstruktion eines digitalen Basisbandsignals (45) eines drahtlosen Kommunikationsnetzwerks (11), wobei das Verfahren umfasst:
- Empfangen eines Signals (S), wobei das Signal (S) Proben (47) des digitalen Basisbandsignals (45) und mindestens einen Zeitstempel (53) enthält, wobei der Zeitstempel (53) mit mindestens einer der besagten Proben (47) assoziiert ist;
- Ermitteln einer aktuellen Zeit (t) durch einen lokalen Taktgeber (57), welcher unabhängig von dem empfangenen Signal (S) läuft; und
- Erzeugen eines digitalen Basisbandsignals (45) durch Ausgeben mindestens einer Probe (47) zu einem Zeitpunkt, welcher von dem Zeitstempel (53) und der aktuellen Zeit (t) abhängt;
**dadurch gekennzeichnet, dass** das Verfahren das Speichern mindestens eines Basisbandsignalmusters in einem Signalmuster-Zwischenspeicher (75) und des Ausgeben mindestens einen Basisbandsignalmusters in Anhängigkeit von einem Empfang einer Angabe (r), welche angibt, wann das mindestens eine Basisbandsignalmuster ausgegeben werden soll, umfasst.

11. Verfahren nach Anspruch 10, wobei das Verfahren von einer Empfangsanordnung gemäß Anspruch 8 oder 9 durchgeführt wird.

12. Gateway-Vorrichtung (33), um eine Basisbandverarbeitungsvorrichtung (17) und einen entfernt angeordneten Funkkopf (13) eines drahtlosen Kommunikationsnetzwerks (11) miteinander zu verbinden, wobei die Gateway-Vorrichtung (33) umfasst:
- Eine Empfangsanordnung (61) gemäß Anspruch 8 oder 9 für den Empfang eines Downlink-Signals (S), welches Proben (47) und Zeitstempel (53) enthält, von der Basisbandverarbeitungsvorrichtung (17) und zum Weiterleiten eines aus dem empfangenen Downlink-Signal (S) rekonstruierten digitalen Downlink-Basisbandsignals (45) an den entfernt angeordneten Funkkopf (13); und
- Eine Übertragungsanordnung (49') für den Empfang eines digitalen Uplink-Basisbandsignals (45) von dem entfernt angeordneten Funkkopf (13) und die Ausgabe eines Uplink-Signals (S), welches Proben (47) und Zeitstempel (53) enthält, an die Basisbandverarbeitungsvorrichtung (17), wobei die Übertragungsanordnung (49) einen Probeneingang (51), welcher für den Empfang der Proben des digitalen Uplink-Basisbandsignals (45) betreibbar ist; einen lokalen Taktgeber (57) welcher für die Ermittlung einer aktuellen Zeit (t) betreibbar ist; einen Zeitstempelgenerator (52), welcher für die Erzeugung mindestens eines Zeitstempels (53) in Abhangigkeit von der aktuellen Zeit (t) betreibbar ist, wobei der Zeitstempel (53) mit mindestens einer Probe (47) assoziiert ist; und einen Ausgang (55), welcher für die Aufgabe eines Uplink-Signals (S) betreibbar ist, wobei das Uplink-Signal (S) die Proben (47) und den mindestens einen Zeitstempel (53) enthält, umfasst.

13. Basisbandsignalverarbeitungsvorrichtung (17) eines drahtlosen Kommunikationsnetzwerks (11), betreibbar für die Erzeugung von für einen entfernt angeordneten Funkkopf (13) des Kommunikationsnetzwerks (11) bestimmte Proben (47) eines digitalen Downlink-Basisbandsignals (45) und für den Empfang von Proben (47) eines von dem entfernt angeordneten Funkkopf (13) ausgegebenen digitalen Uplink-Basisbandsignals (45), wobei die Basisbandsignalverarbeitungsvorrichtung (17) umfasst:
- Eine Übertragungsanordnung (49) gemäß einem der Anspruche 1 bis 5 für den Empfang von Proben (47) des digitalen Downlink-Basisbandsignals (45) und für die Ausgabe eines Downlink-Signals (S), welches die Proben (47) und die Zeitstempel (53) enthält; und
- eine Empfangsanordnung (61') für den Empfang eines Uplink-Signals (S), welches Proben (47) und Zeitstempel (53) enthält und die Proben (47) des digitalen Uplink-Basisbandsignals (45) wiedererzeugt, wobei die Empfangsanordnung (61) einen Signaleingang (63), welcher für den Empfang des Uplink-Signals (S) betreibbar ist, wobei das Uplink-Signal Proben (47) eines digitalen Uplink-Basisbandsignals (45) und mindestens einen Zeitstempel enthält (53), wobei der Zeitstempel (53) mit mindestens einer des besagten Proben (47) assoziiert ist; einen lokalen Taktgeber (57), welcher unabhängig von dem empfangenen Uplink-Signal (S) läuft und für die Ermittlung einer aktuellen Zeit (t) betreibbar ist; und einen Signalgenerator (67) für die Ausgabe des digitalen Uplink-Basisbandsignals (45), wobei der Signalgenerator (67) für die Ausgabe mindestens einer Probe (47 zu einem Zeitpunkt, welche von dem Zeitstempel (53) und von der aktuellen Zeit (t) abhängt, betreibbar ist, umfasst.

14. Computerprogramm-Produkt mit einem Computerprogramm, welches für die Durchführung eines Verfahrens gemäß Anspruch 6, 7, 10 order 11 programmiert ist, wenn es auf einem Computer läuft.

## Revendications

1. Dispositif émetteur (49) pour transmettre des échantillons (47) d'un signal numérique en bande de base (45) d'un réseau de communication sans fil (11), le dispositif émetteur (49) comprenant
- une entrée d'échantillons (51) permettant de recevoir les échantillons du signal numérique en bande de base (45) ;
- une horloge locale (57) permettant de déterminer une heure actuelle (t) ;
- un générateur d'estampille temporelle (52) permettant de générer au moins une estampille temporelle (53) en fonction de l'heure actuelle (t), l'estampille temporelle (53) étant associée à au moins un échantillon (47) ; et
- une sortie (55) permettant de délivrer en sortie un signal (S) du réseau de communication sans fil (11) à un dispositif récepteur (61) pour recevoir le signal (S), le signal (S) contenant les échantillons (47) et l'au moins une estampille temporelle (53) ;
**caractérisé en ce que** le dispositif émetteur (49) est conçu pour transmettre au moins un modèle de signal en bande de base au dispositif récepteur (61) et pour transmettre une indication (r) au dispositif récepteur (61), l'indication (r) indiquant le moment ou l'au moins un modèle de signal en bande de base devra être délivré en sortie par le dispositif récepteur (61).

2. Dispositif émetteur (49) selon la revendication 1, dans lequel l'horloge locale (57) comprend des circuits de référence temporelle (59) comprenant un récepteur de référence temporelle pour recevoir un signal de référence temporelle, de préférence un signal GPS (GPS).

3. Dispositif émetteur (49) selon la revendication 1 ou 2, dans lequel l'estampille temporelle (53) indique un temps de transmission planifié de l'échantillon (47) auquel l'estampille temporelle (53) est associée et/ou dans lequel le dispositif émetteur (49) permet de délivrer en sortie au moins certains échantillons (47) indépendamment de leur temps de transmission planifié.

4. Dispositif émetteur (49) selon l'une des revendications précédentes, dans lequel l'estampille temporelle (53) est associée à un seul échantillon (47), de préférence à chaque échantillon (47) ou à un groupe d'échantillons consécutifs (47).

5. Dispositif émetteur (49) selon l'une des revendications précédentes, dans lequel le signal (S) comprend au moins un modèle de signal en bande de base commun devant être transmis par des dispositifs de transmission RF multiples (13) et au moins un modèle de signal en bande de base spécifique devant être transmis par un seul dispositif de transmission RF (13).

6. Procédé de transmission d'un signal (S) d'un réseau de communication sans fil, le procédé comprenant les étapes suivantes
- recevoir des échantillons (47) d'un signal numérique en bande de base (45) ;
- déterminer une heure actuelle (t) ;
- générer au moins une estampille temporelle (53) en fonction de l'heure actuelle (t), l'estampille temporelle (53) étant associée à au moins un échantillons (47) ; et
- délivrer en sortie le signal (S) à un dispositif récepteur (61) pour recevoir le signal (S), le signal (S) contenant les échantillons (47) et l'au moins une estampille temporelle (53) ;
**caractérisé en ce que** le procédé comprend la transmission d'au moins un modèle de signal en bande de base au dispositif récepteur (61) et la transmission d'une indication (r) au dispositif récepteur (61), l'indication (r) indiquant le moment où l'au moins un modèle de signal en bande de base devra être délivré en sortie par le dispositif récepteur (61).

7. Procédé selon la revendication 6, dans lequel le procédé est exécuté par un dispositif émetteur (49) selon l'une des revendications 1 à 5.

8. Dispositif récepteur (61) pour recevoir un signal (S) d'un réseau de communication sans fil (11), le dispositif récepteur (61) comprenant
- une entrée de signal (63) permettant de recevoir le signal (S), le signal comprenant des échantillons (47) d'un signal numérique en bande de base (45) et au moins une estampille temporelle (53), l'estampille temporelle (53) étant associée à au moins un desdits échantillons (47) ;
- une horloge locale (57) fonctionnant indépendamment du signal reçu (S) et permettant de déterminer une heure actuelle (t) ; et
- un générateur de signal (67) pour délivrer en sortie le signal numérique en bande de base (45), le générateur de signal (67) permettant de délivrer en sortie au moins un échantillon (47) à un moment donné qui dépend de l'estampille temporelle (53) et de l'heure actuelle (t) ;
**caractérisé en ce que** le dispositif récepteur (61) comprend un tampon de modèle de signal (75) pour stocker au moins un modèle de signal en bande de base et dans lequel le dispositif récepteur (61) permet de délivrer en sortie l'au moins un modèle de signal en bande de base en fonction d'une réception d'une indication (r) qui indique le moment où l'au moins un modèle de signal en bande de base devra être délivré en sortie.

9. Dispositif récepteur (61) selon la revendication 8, dans lequel le dispositif récepteur (61) comprend un processeur de signal (68) conçu pour recevoir un ensemble de paramètres de transformation (p), l'ensemble de paramètres de transformation (p) décrivant comment transformer le signal numérique en bande de base (45) en au moins un autre signal numérique en bande de base (45a), et comment transformer le signal numérique en bande de base (45) en fonction de l'ensemble de paramètres de transformation (p).

10. Procédé de reconstruction d'un signal numérique en bande de base (45) d'un réseau de communication sans fil (11), le procédé comprenant les étapes suivantes
- recevoir un signal (S), le signal (S) comprenant des échantillons (47) du signal numérique en bande de base (45) et au moins une estampille temporelle (53), l'estampille temporelle (53) étant associée à au moins un desdits échantillons (47) ;
- déterminer une heure actuelle (t) au moyen d'une horloge locale (57) fonctionnant indépendamment du signal reçu (S) ; et
- générer le signal numérique en bande de base (45) en délivrant en sortie au moins un échantillon (47) à un moment donné qui dépend de l'estampille temporelle (53) et de l'heure actuelle (t) ;
**caractérisé en ce que** le procédé consiste à stocker au moins un modèle de signal en bande de base dans un tampon de modèle de signal (75) et à délivrer en sortie l'au moins un modèle de signal en bande de base en fonction d'une réception d'une indication (r) qui indique le moment où l'au moins un modèle de signal en bande de base devra être délivré en sortie.

11. Procédé selon la revendication 10, dans lequel le procédé est exécuté par un dispositif récepteur selon la revendication 8 ou 9.

12. Dispositif passerelle (33) pour interconnecter un dispositif de traitement en bande de base (17) et une tête radio distante (13) d'un réseau de communication sans fil (11) l'un avec l'autre, le dispositif passerelle (33) comprenant
- un dispositif récepteur (61) selon la revendication 8 ou 9 pour recevoir un signal de liaison descendante (S) comprenant des échantillons (47) et des estampilles temporelles (53) à partir du dispositif de traitement en bande de base (17) et pour transférer un signal numérique en bande de base de liaison descendante (45) reconstruit à partir du signal de liaison descendante reçu (S) vers la tête radio distante (13) ; et
- un dispositif émetteur (49') pour recevoir un signal numérique en bande de base de liaison montante (45) à partir de la tête radio distante (13) et pour délivrer en sortie un signal de liaison montante (S) comprenant des échantillons (47) et des estampilles temporelles (53) au dispositif de traitement en bande de base (17), dans lequel le dispositif émetteur (49) comprend une entrée d'échantillons (51) permettant de recevoir les échantillons du signal numérique en bande de base de liaison montante (45) ; une horloge locale (57) permettant de déterminer une heure actuelle (t) ; un générateur d'estampille temporelle (52) permettant de générer au moins une estampille temporelle (53) en fonction de l'heure actuelle (t), l'estampille temporelle (53) étant associée à au moins un échantillon (47) ; et une sortie (55) permettant de délivrer en sortie un signal de liaison montante (S), le signal de liaison montante (S) comprenant les échantillons (47) et l'au moins une estampille temporelle (53).

13. Dispositif de traitement de signal en bande de base (17) d'un réseau de communication sans fil (11) permettant de générer des échantillons (47) d'un signal numérique en bande de base de liaison descendante (45) destiné à une tête radio distante (13) du réseau de communication (11) et de recevoir des échantillons (47) d'un signal numérique en bande de base de liaison montante (45) provenant de la tête radio distante (13), le dispositif de traitement de signal en bande de base (17) comprenant
- un dispositif émetteur (49) selon l'une des revendications 1 à 5 pour recevoir des échantillons (47) du signal numérique en bande de base de liaison descendante (45) et pour délivrer en sortie un signal de liaison descendante (S) comprenant les échantillons (47) et les estampilles temporelles (53) ; et
- un dispositif récepteur (61') pour recevoir un signal de liaison montante (S) comprenant des échantillons (47) et des estampilles temporelles (53) et générer à nouveau les échantillons (47) du signal numérique en bande de base de liaison montante (45), dans lequel le dispositif récepteur (61) comprend une entrée de signal (63) permettant de recevoir le signal de liaison montante (S), le signal de liaison montante comprenant des échantillons (47) d'un signal numérique en bande de base de liaison montante (45) et au moins une estampille temporelle (53), l'estampille temporelles (53) étant associée à au moins un desdits échantillons (47) ; une horloge locale (57) fonctionnant indépendamment du signal de liaison montante reçu (S) et permettant de déterminer une heure actuelle (t) ; et un générateur de signal (67) pour délivrer en sortie le signal numérique en bande de base de liaison montante (45), le générateur de signal (67) permettant de délivrer en sortie au moins un échantillon (47) à un moment donné qui dépend de l'estampille temporelle (53) et de l'heure actuelle (t).

14. Produit de programme informatique comprenant un programme informatique programmé pour exécuter un procédé selon la revendication 6, 7, 10 ou 11 lorsqu'il est exécuté sur un ordinateur.
